(19) Europäisches Patentamt
European Patent Office
Office européen des brevets

(11) **EP 3 129 655 B1**

(12) **EUROPEAN PATENT SPECIFICATION**

(45) Date of publication and mention
of the grant of the patent:
**10.11.2021 Bulletin 2021/45**

(51) Int Cl.:
*F04B 47/02* (2006.01)     *F04B 49/06* (2006.01)
*E21B 47/00* (2012.01)     *E21B 43/12* (2006.01)

(21) Application number: **15725134.9**

(22) Date of filing: **01.04.2015**

(86) International application number:
**PCT/US2015/023763**

(87) International publication number:
**WO 2015/149083 (01.10.2015 Gazette 2015/39)**

(54) **METHOD AND APPARATUS TO DETERMINE PRODUCTION OF DOWNHOLE PUMPS**

VERFAHREN UND VORRICHTUNG ZUR BESTIMMUNG DER FÖRDERMENGE VON
BOHRLOCHPUMPEN

PROCÉDÉ ET DISPOSITIF POUR DÉTERMINER LA PRODUCTION DE POMPES DE FOND

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.02.2017 Bulletin 2017/07**

(73) Proprietor: **Bristol, Inc., D/B/A Remote Automated
Solutions
Watertown, CT 06795 (US)**

(72) Inventor: **MILLS, Thomas, Matthew
Katy, TX 77450 (US)**

(74) Representative: **Foot, Paul Matthew James
Withers & Rogers LLP
2 London Bridge
London SE1 9RA (GB)**

(56) References cited:
**US-A1- 2013 024 138     US-B2- 7 212 923**

• **None**

**Description**

FIELD OF THE DISCLOSURE

This disclosure relates generally to downhole pumps and, more particularly, to methods and apparatus to determine production of downhole pumps.

BACKGROUND

Downhole pumps are used to pump fluid from a formation by moving a piston relative to a bore. Clearance is provided between the piston and the bore to ensure that downhole debris does not negatively affect the performance of the downhole pump. However, this clearance allows for leakage between the piston and the bore.

US 2013/0024138 discloses methods for measuring the leakage rate of a downhole pump using either measured axial load information from the drive rod string or using measured axial load information.

US 7212923 discloses a method for inferring production of a rod pumped well.

BRIEF DESCRIPTION OF THE DRAWINGS

FIG. 1 shows a pumping unit including an example apparatus used to determine the production of a well in accordance with the teachings of this disclosure.
FIG. 2 shows an example surface dynamometer card that can be produced in accordance with the teachings of this disclosure.
FIG. 3 shows an example pump dynamometer card that can be produced in accordance with the teachings of this disclosure.
FIG. 4 is a flowchart representative of example methods that may be used to implement the example apparatus of FIG. 1.
FIG. 5 is a processor platform to implement the methods of FIG. 4 and/or the apparatus of FIG. 1.
The figures are not to scale. Wherever possible, the same reference numbers will be used throughout the drawing(s) and accompanying written description to refer to the same or like parts.

DETAILED DESCRIPTION

In accordance with the teachings of this disclosure, information associated with downhole reciprocating pumps may be used to approximate production from a corresponding well. Specifically, production from the well may be inferred based on the number of strokes of the pumping unit, the geometry of the downhole pump and/or an example leakage proportionality constant. In some examples, the leakage proportionality constant accounts for the clearance between a plunger or piston of the pump and its bore. As set forth herein, the example leakage proportionality constant may be determined based on an amount of observed production during a test period, a sum of pump card areas during the test period and a pressure difference across the downhole pump.

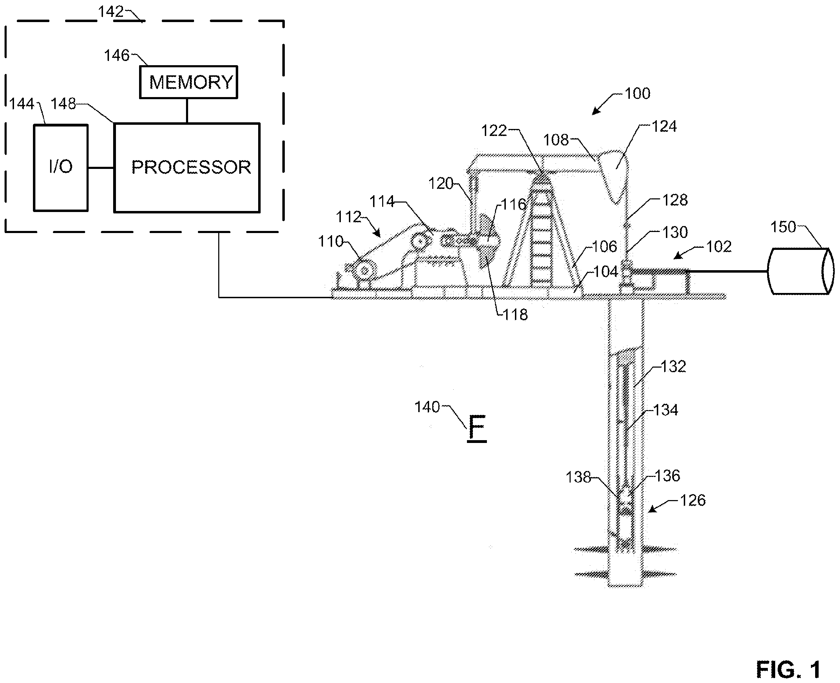

FIG. 1 shows a known crank arm balanced pumping unit and/or pumping unit 100 that can be used to produce oil from an oil well 102. The pumping unit 100 includes a base 104, a Sampson post 106 and a walking beam 108. The pumping unit 100 also includes a motor or engine 110 that drives a belt and sheave system 112 to rotate a gear box 114 and, in turn, rotate a crank arm 116 and a counterweight 118. A pitman 120 is coupled between the crank arm 116 and the walking beam 108 such that rotation of the crank arm 116 moves the pitman 120 and the walking beam 108. As the walking beam 108 pivots about a pivot point and/or saddle bearing 122, the walking beam 108 moves a horse head 124 to reciprocate a downhole pump 126 via a bridle 128, a polished rod 130, a tubing string 132 and a rod string 134. Reciprocating the pump 126 moves a piston 136 of the pump 126 within a bore 138 of the pump 126 to draw liquid from the surrounding formation 140.

To ensure that debris does not negatively impact production and/or negatively impact movement of the piston 136 relative to the bore 138, a clearance and/or gap is provided between the piston 136 and the bore 138. This clearance reduces the volume of fluid produced by the pump 126 during each stroke of the pumping unit 100.

To accurately determine the production from the pump 126, the pumping unit 100 includes an example apparatus and/or rod pump controller 142. In this example, data from and/or associated with the pumping unit 100 is received by an input/output (I/O) device 144 of the apparatus 142 and stored in a memory 146 that is accessible by a processor 148. As disclosed below, the processor 148 can perform processes to determine, for example, an example leakage proportionality constant (e.g., in²/lbf), the volume of fluid leaked through the pump 126 (e.g., in³) and/or the net fluid produced during a stroke of the pumping unit 100 and/or a given time period.

For example, the processor 148 can determine a volume of fluid leaked through the pump 126 between the piston 136 and the bore 138 using Equation 1 below where LKG represents the volume of fluid leaked through the pump 126, $C_{LKG}$ represents the leakage proportionality constant and $A_{PC}$ represents the area of the pump card.

$$\text{Equation 1: } LKG = C_{LKG} * A_{PC}$$

In this example, the processor 148 can determine the leakage proportionality constant using Equation 2 where $\Delta P$ represents the pressure difference across the pump 126 (e.g., the difference of a pump discharge pressure and a pump intake pressure), $P_{observed}$ represents the total observed production during a series of strokes of the pumping unit 100 (e.g., the total production during a predetermined time period) and $\Sigma(A_{PC})$ represents the sum of the areas of the pump cards. In some examples, the liquid produced from the well is directly measured at separator conditions using a well test separator 150.

$$\text{Equation 2: } C_{LKG} = \frac{1}{\Delta P} - \left[\frac{P_{observed}}{\Sigma(A_{PC})}\right]$$

In this example, the processor 148 can determine the net production of fluid for a pump stroke, $IP_{stroke}$, using Equation 3 where $V_{stroke}$ represents the volume of fluid produced during a stroke if no leakage were present, which is not the case because the clearance between the piston 136 and the bore 138 results in a non-zero leakage.

$$\text{Equation 3: } IP_{stroke} = V_{stroke} - LKG$$

In this example, because $V_{stroke}$ can be represented by Equation 4, Equation 3 can be can be rewritten as set forth below in Equation 5.

$$\text{Equation 4: } V_{stroke} = \frac{A_{PC}}{\Delta P}$$

$$\text{Equation 5: } IP_{stroke} = A_{PC}\left[\left(\frac{1}{\Delta P}\right) - C_{LKG}\right]$$

In this example, as set forth in Equation 6 and based on Equation 5, the total observed production during a series of strokes of the pumping unit 100, $P_{observed}$, can be related to the area of the pump card, $\Sigma(A_{PC})$, the pressure difference across the pump 126, $\Delta P$, and the leakage proportionality constant, $C_{LKG}$.

$$\text{Equation 6: } P_{observed} = \Sigma\left(A_{PC}\left[\left(\frac{1}{\Delta P}\right)\left[\frac{1}{\Delta P} - C_{LKG}\right]\right]\right)$$

As illustrated in Equation 2, Equation 6 can be rewritten to solve for the leakage proportionality constant, $C_{LKG}$.

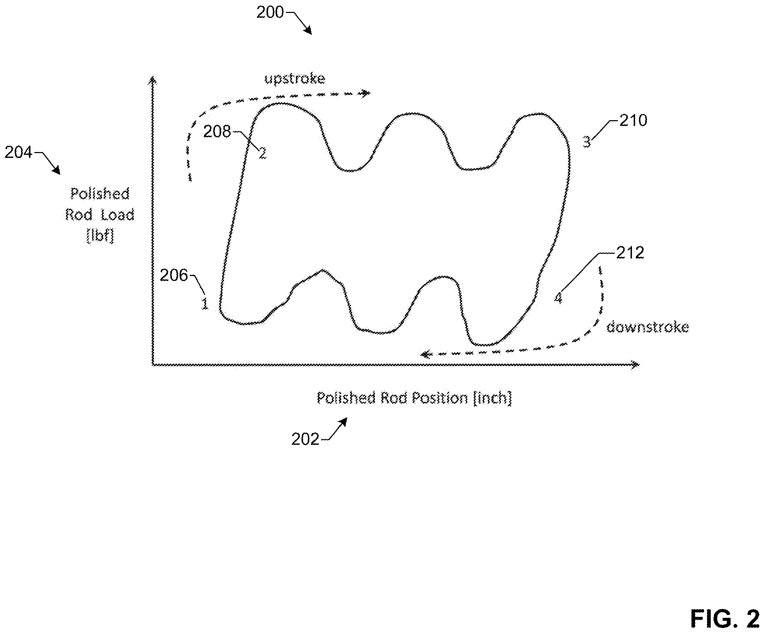

FIG. 2 shows an example surface dynamometer card 200 that can be generated in accordance with the teachings of this disclosure using data associated with the vertical displacement of the polished rod 130 versus time and data associated with tension on the polished rod 130 versus time. In some examples, the surface dynamometer card 200 represents a scenario in which the downhole pump 126 is operating normally with adequate liquid to pump. As shown in FIG. 2, the x-axis 202 corresponds to the position of the polished rod 130 and the y-axis 204 corresponds to the load on the polished rod 130.

Reference number 206 corresponds to when the polished rod 130 begins its upward motion to begin to lift a column of fluid. Between reference numbers 206 and 208, the increase in tension on the polished rod 130 is shown as the polished rod 130 is stretched and the fluid column is lifted. Reference number 208 corresponds to when the pumping unit 100 is supporting the weight of the rod string 134 and the weight of the accelerating fluid column. Between reference numbers 208 and 210, force waves arrive at the surface as the upstroke continues, which causes the load on the polished rod 130 to fluctuate. Reference number 210 corresponds to when the polished rod 130 has reached its maximum upward displacement. Between reference numbers 210 and 212, the fluid load is transferred from the rod string 134 to the tubing string 132, which causes the tension in the polished rod 130 to decrease. Reference number 212 corresponds to when the load has substantially and/or completely transferred to the tubing string 132. Between reference numbers 212 and 206, force waves reflect to the surface as the downstroke continues, which causes irregular loading on the polished rod 130 until the polished rod 130 reaches its lowest point and begins another stroke.

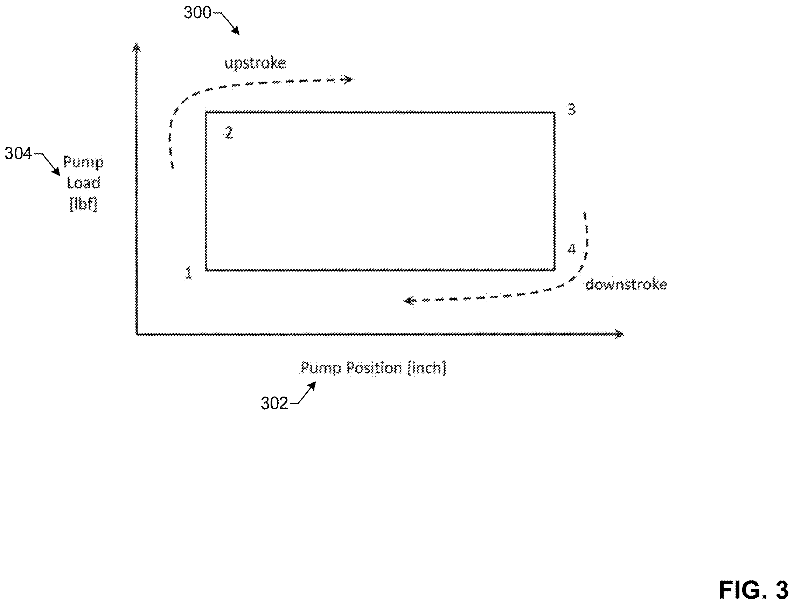

FIG. 3 shows an example pump dynamometer card 300 that can be generated in accordance with the teachings of this disclosure using data associated with the position of the polished rod 130 and the load on the polished rod 130. In some examples, the pump dynamometer card 300 is generated using data measured at the surface. As shown in FIG. 3, the x-axis 302 corresponds to the position of the downhole pump and the y-axis 304 corresponds to the load on the downhole pump.

While an example manner of implementing the apparatus 142 is illustrated in FIG. 1, one or more of the elements, processes and/or devices illustrated in FIG. 1 may be combined, divided, re-arranged, omitted, eliminated and/or implemented in any other way. Further, the I/O device 144, the memory 146, the processor 148 and/or, more generally, the example apparatus 142 of FIG. 1 may be implemented by hardware, software, firmware and/or any combination of hardware, software and/or firmware. Thus, for example, any of the I/O device 144, the memory 146, the processor 148 and/or, more generally, the example apparatus 142 of FIG. 1 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent are read to cover a purely software and/or firmware implementation, at least one of the example I/O device 144, the memory 146, the processor 148 and/or, more generally, the example apparatus 142 of FIG. 1 is/are hereby expressly defined to include a tangible computer readable storage device or storage disk such as a memory, a digital versatile disk (DVD), a compact disk (CD), a Blu-ray disk, etc. storing the software and/or firmware. Further still, the example apparatus 142 of FIG. 1 may include one or more elements, processes and/or devices in addition to, or instead of, those illustrated in FIG. 1, and/or may include more than one of any or all of the illustrated elements, processes and devices. While FIG. 1 depicts a conventional crank-balanced pumping unit, the examples disclosed herein can be implemented in connection with any other pumping unit.

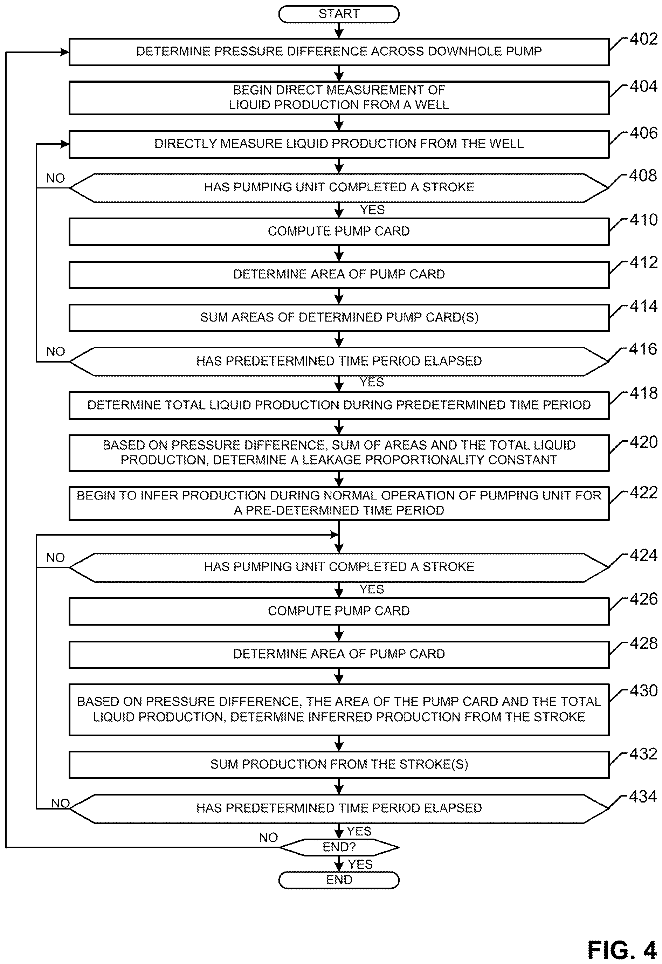

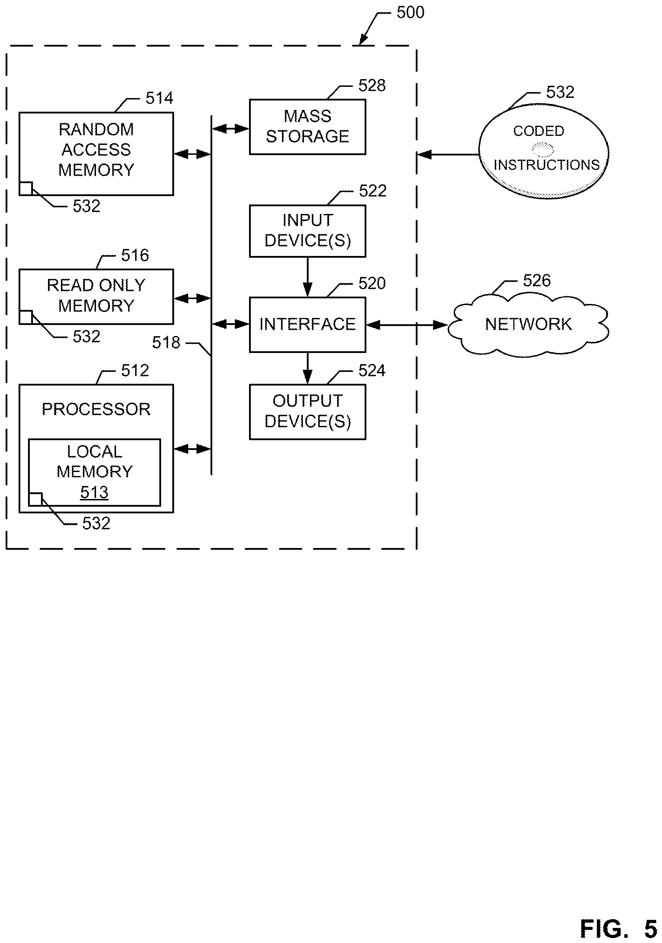

A flowchart representative of an example method for implementing the apparatus 142 of FIG. 1 is shown in FIG. 4. In this example, the method of FIG. 4 may be implemented by machine readable instructions that comprise a program for execution by a processor such as the processor 512 shown in the example processor platform 500 discussed below in connection with FIG. 5. The program may be embodied in software stored on a tangible computer readable storage medium such as a CD-ROM, a floppy disk, a hard drive, a digital versatile disk (DVD), a Blu-ray disk, or a memory associated with the processor 512, but the entire program and/or parts thereof could alternatively be executed by a device other than the processor 512 and/or embodied in firmware or dedicated hardware. Further, although the example program is described with reference to the flowchart illustrated in FIG. 4 many other methods of implementing the example apparatus 142 may alternatively be used. For example, the order of execution of the blocks may be changed, and/or some of the blocks described may be changed, eliminated, or combined.

As mentioned above, the example method of FIG. 4 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example method of FIG. 4 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. As used herein, when the phrase "at least" is used as the transition term in a preamble of a claim, it is open-ended in the same manner as the term "comprising" is open ended.

The method of FIG. 4 begins by determining a pressure difference across the pump 126 (block 402). At block 404, the process of directly measuring liquid production from the well 102 for a first predetermined period of time and/or for a first predetermined number of strokes begins (block 404). The liquid produced from the well 102 is directly measured for a series of strokes of the pumping unit 100 (block 406). In some examples, the liquid is directly measured at separator conditions using the well test separator 150. At block 408, the processor 148 determines if the pumping unit 100 has completed a stroke (block 408). In some examples, the processor 148 determines that the pumping unit 100 completes a stroke based on feedback received from a sensor adjacent the crank arm 116. If a stroke of the pumping unit 100 has not completed, the method continues to directly measure the liquid produced from the well 102 (block 406).

However, if the pumping unit 100 has completed a stroke, the processor 148 computes a pump card based on, for example, a determined surface card (block 410). Using the pump card, the processor 148 determines the area of the pump card (block 412). At block 414, the processor 148 sums the area of the pump card(s) determined since the predetermined time period began (block 414). The processor 148 then determines if the time period has elapsed and/or if the predetermined number of strokes of the pumping unit 100 has occurred (block 416). If the first predetermined time period has not elapsed and/or if the predetermined number of strokes has not occurred, the liquid produced from the well continues to be measured (block 406).

However, if the first predetermined time period has elapsed and/or if the predetermined number of strokes has occurred, the total liquid produced during the first predetermined time period is determined (block 418). At block 420, the processor 148 determines the leakage proportionality constant (block 420). In some examples, an example leakage proportionality constant is determined using Equation 2 based on the pressure difference across the pump 126, the sum of the areas of the pump cards and the amount of first total liquid produced during the first predetermined time period.

At block 422, the production of the pumping unit 100 during normal operation and/or while the pumping unit 100 is continuously operating is determined and/or inferred for a second predetermined time period (block 422). The second predetermined time period may be, for example, a day, a week, a month, etc. The processor 148 then determines if the pumping unit 100 has completed a stroke (block 424). If a stroke of the pumping unit 100 has not completed, the method iteratively determines if a stroke has completed.

However, if the processor 148 determines that the pumping unit 100 has completed a stroke, the processor 148 computes the pump card using, for example, the determined surface card (block 426). Using the pump card, the processor 148 determines the area of the pump card (block 428).

At block 430, the processor 148 infers and/or determines the production from a stroke of the pumping unit 100 (block 430). In some examples, the production from a stroke of the pumping unit 100 is determined using Equation 5 based on the pressure difference across the pump 126, the area of the pump card and the amount of liquid produced during the first predetermined time period.

At block 432, the processor 148 sums the production from the stroke(s) since the second predetermined time period began (block 432). The processor 148 then determines if the second predetermined time period has elapsed (block 434). If the second predetermined time period has not elapsed, the processor 148 determines if the pumping unit 100 had completed a stroke (block 424).

FIG. 5 is a block diagram of an example processor platform 500 capable of executing instructions to implement the method of FIG. 4 and/or to implement the apparatus of FIG. 1. The processor platform 500 can be, for example, a server, a personal computer, a mobile device (e.g., a cell phone, a smart phone, a tablet such as an iPad™), or any other type of computing device.

The processor platform 500 of the illustrated example includes a processor 512. The processor 512 of the illustrated example is hardware. For example, the processor 512 can be implemented by one or more integrated circuits, logic circuits, microprocessors or controllers from any desired family or manufacturer.

The processor 512 of the illustrated example includes a local memory 513 (e.g., a cache). The processor 512 of the illustrated example is in communication with a main memory including a volatile memory 514 and a non-volatile memory 516 via a bus 518. The volatile memory 514 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 516 may be implemented by flash memory and/or any other desired type of memory device. Access to the main memory 514, 516 is controlled by a memory controller.

The processor platform 500 of the illustrated example also includes an interface circuit 520. The interface circuit 520 may be implemented by any type of interface standard, such as an Ethernet interface, a universal serial bus (USB), and/or a PCI express interface.

In the illustrated example, one or more input devices 522 are connected to the interface circuit 520. The input device(s) 522 permit a user to enter data and commands into the processor 512. The input device(s) can be implemented by, for example, an audio sensor, a microphone, a keyboard, a button, a mouse, a touchscreen, a track-pad, a trackball, isopoint and/or a voice recognition system.

One or more output devices 524 are also connected to the interface circuit 520 of the illustrated example. The output devices 524 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer and/or speakers). The interface circuit 520 of the illustrated example, thus, typically includes a graphics driver card.

The interface circuit 520 of the illustrated example also includes a communication device such as a transmitter, a receiver, a transceiver, a modem and/or network interface card to facilitate exchange of data with external machines (e.g., computing devices of any kind) via a network 526 (e.g., an Ethernet connection, a digital subscriber line (DSL), a telephone line, coaxial cable, a cellular telephone system, etc.).

The processor platform 500 of the illustrated example also includes one or more mass storage devices 528 for storing software and/or data. Examples of such mass storage devices 528 include floppy disk drives, hard drive disks, compact disk drives, Blu-ray disk drives, RAID systems, and digital versatile disk (DVD) drives.

Coded instructions to implement the method of FIG. 4 may be stored in the mass storage device 528, in the volatile memory 514, in the non-volatile memory 516, and/or on a removable tangible computer readable storage medium such as a CD or DVD.

From the foregoing, it will appreciated that the above disclosed methods, apparatus and articles of manufacture relate to determining the production of a downhole reciprocating pump by, for example, relating the work performed by a pumping unit on a sucker rod string to the work used to lift a single volumetric unit of fluid from the well. Using this relationship, the work performed by the pumping unit during a single stroke of the pumping unit can be used to estimate the amount of fluid produced during the stroke. The estimated production from each stroke can be summed over a period of time (e.g., hourly, daily, monthly, etc.) to infer, estimate and/or determine production estimate for the pumping unit.

In at least some examples, a rod pump controller does not calculate the downhole pump card. Thus, the examples disclosed herein can be incorporated on a computing platform of moderate to low computational power. Using the examples disclosed herein, there is no need to analyze the downhole pump card to identify the net liquid stroke, the fluid load or other such parameters from the downhole card. In at least some examples, a leakage test is not performed because the leakage proportionality constant is determined using calculations associated with a well test. The examples disclosed herein can be implemented in a field controller.

As set forth herein, a method includes measuring an amount of liquid produced from a well by a pumping unit during a predetermined time period and determining first areas of first pump cards during the predetermined time period. The method also includes summing the first areas and, based on the amount of liquid produced and the summed first areas, determining a leakage proportionality constant of a downhole pump of the pumping unit.

In some examples, the method also includes, while continuously operating the pumping unit, determining a second area of a second pump card. In some examples, the method also includes determining a net fluid produced during a stroke of the pumping unit based on the leakage proportionality constant and the second area. In some examples, measuring the amount of liquid produced comprises measuring the liquid produced at separator conditions using a well test separator.

In some examples, determining the first areas of first pump cards during the predetermined time period comprises using a rod pump controller to determine the first areas. In some examples, the method also includes, while continuously operating the pumping unit over a second predetermined time period, determining second areas of second pump cards. In some examples, the method also includes determining a net fluid produced during the second predetermined time period based on the proportionality constant and the second areas. In some examples, the leakage proportionality constant is determined further based on a pressure difference across the downhole pump of the pumping unit.

An example apparatus includes a housing for use with a pumping unit and a processor positioned in the housing. The processor is to determine first areas of first pump cards during a predetermined time period, sum the first areas and, based on an amount of liquid produced by a downhole pump of the pumping unit during the predetermined time period from a well and the summed first areas, determine a leakage proportionality constant of the downhole pump.

In some examples, while continuously operating the pumping unit, the processor is to determine a second area of a second pump card. In some examples, the processor is to determine a net fluid produced during a stroke of the pumping unit based on the leakage proportionality constant and the second area. In some examples, the apparatus includes a rod pump controller. In some examples, while continuously operating the pumping unit over a second predetermined time period, the processor is to determine second areas of second pump cards. In some examples, the processor is to determine a net fluid produced during the second predetermined time period based on the proportionality constant and the second areas. In some examples, the processor is to determine the leakage proportionality constant further based on a pressure difference across the downhole pump of the pumping unit.

**Claims**

1.  A method, comprising:

    measuring an amount of liquid produced from a well (406) by a pumping unit (100) during a predetermined time period;
    determining first areas (412) of first pump cards (410) during the predetermined time period;
    summing the first areas (414);
    determining a pressure difference (402) across a downhole pump (126) of the pumping unit (100); and
    based on the amount of liquid produced (418), the summed first areas (414), and the pressure difference (402), determining a leakage proportionality constant (420) of the downhole pump (126) of the pumping unit (100).

2. The method of claim 1, further comprising, while continuously operating the pumping unit (100), determining a second area (428) of a second pump card (426).

3. The method of claim 2, further comprising determining a net fluid produced during a stroke (430) of the pumping unit (100) based on the leakage proportionality constant (420) and the second area (428).

4. The method of any of the preceding claims, wherein measuring the amount of liquid produced comprises measuring the liquid produced at separator conditions using a well test separator (150).

5. The method of any of the preceding claims, wherein determining the first areas (412) of first pump cards (410) during the predetermined time period comprises using a rod pump controller (142) to determine the first areas (412).

6. The method of any of the preceding claims, further comprising, while continuously operating the pumping unit (100) over a second predetermined time period (422), determining second areas (428) of second pump cards (426).

7. The method of claim 6, further comprising determining a net fluid (432) produced during the second predetermined time period based on the proportionality constant (420) and the second areas (428).

8. An apparatus, comprising:

   a pumping unit (100);
   a housing for use with the pumping unit (100); and
   a processor (148) positioned in the housing, the processor (148) to:

   determine first areas (412) of first pump cards (410) during a predetermined time period;
   sum the first areas (414);
   determine a pressure difference (402) across a downhole pump (126) of the pumping unit (100); and
   based on an amount of liquid produced by the downhole pump (126) of the pumping unit (100) during the predetermined time period, the summed first areas (414), and the pressure difference (402) across the downhole pump (126), determine a leakage proportionality constant (420) of the downhole pump (126).

9. The apparatus of claim 8, wherein the processor (148) is to determine a second area (428) of a second pump card (426).

10. The apparatus of claim 9, wherein the processor (148) is to determine a net fluid produced during a stroke of the pumping unit based on the leakage proportionality constant (420) and the second area (428).

11. The apparatus of any of claims 8 to 10, wherein the processor (148) is part of a rod pump controller (142).

12. The apparatus of any of claims 8 to 11, wherein, while continuously operating the pumping unit (100) over a second predetermined time period, the processor (148) is to determine second areas (428) of second pump cards (426).

13. The apparatus of claim 12, wherein the processor (148) is to determine a net fluid produced during the second predetermined time period based on the proportionality constant (420) and the second areas (428).

**Patentansprüche**

1. Verfahren, welches umfasst:

   ein Messen einer Flüssigkeitsmenge, die von einer Pumpeinheit (100) während eines vorbestimmten Zeitraums aus einem Bohrloch (406) erzeugt wird;
   ein Bestimmen von ersten Bereichen (412) erster Pumpkarten (410) während des vorbestimmten Zeitraums;
   ein Summieren der ersten Bereiche (414);
   ein Bestimmen einer Druckdifferenz (402) über eine Bohrlochpumpe (126) der Pumpeinheit (100); und
   ein Bestimmen einer Leckproportionalitätskonstante (420) der Bohrlochpumpe (126) der Pumpeinheit (100) auf der Grundlage von einer erzeugten Flüssigkeitsmenge (418), von den summierten ersten Bereichen (414) und von der Druckdifferenz (402).

2. Verfahren nach Anspruch 1, welches ferner, während die Pumpeinheit (100) kontinuierlich betrieben wird, ein Bestimmen eines zweiten Bereichs (428) einer zweiten Pumpkarte (426) umfasst.

3. Verfahren nach Anspruch 2, welches ferner basierend auf der Leckproportionalitätskonstante (420) und dem zweiten Bereich (428) ein Bestimmen eines Nettofluids, das während eines Hubs (430) der Pumpeinheit (100) erzeugt wird, umfasst.

4. Verfahren nach einem der vorhergehenden Ansprüche, wobei ein Messen der erzeugten Flüssigkeitsmenge ein Messen der unter Abscheiderbedingungen produzierten Flüssigkeit mittels eines Bohrlochprüfabscheiders (150) umfasst.

5. Verfahren nach einem der vorhergehenden Ansprüche, wobei das Bestimmen der ersten Bereiche (412) der ersten Pumpenkarten (410) während des vorbestimmten Zeitraums ein Verwenden einer Stabpumpensteuerung (142) zum Bestimmen der ersten Bereiche (412) umfasst.

6. Verfahren nach einem der vorhergehenden Ansprüche, welches ferner, während kontinuierlich die Pumpeinheit (100) über einen zweiten vorbestimmten Zeitraum (422) betrieben wird, ein Bestimmen von zweiten Bereichen (428) der zweiten Pumpkarten (426) umfasst.

7. Verfahren nach Anspruch 6, welches ferner ein Bestimmen eines Nettofluids (432), das während des zweiten vorbestimmten Zeitraums erzeugt wird, basierend auf der Proportionalitätskonstante (420) und den zweiten Bereichen (428) umfasst.

8. Vorrichtung, welche aufweist:

   eine Pumpeinheit (100);
   ein Gehäuse zur Verwendung mit der Pumpeinheit (100); und
   einen Prozessor (148), der in dem Gehäuse angeordnet ist, wobei der Prozessor (148) ausgestaltet ist,
   um erste Bereiche (412) von ersten Pumpkarten (410) während eines vorbestimmten Zeitraums zu bestimmen;
   um die ersten Bereiche (414) zu summieren;
   um eine Druckdifferenz (402) über eine Bohrlochpumpe (126) der Pumpeinheit (100) zu bestimmen; und
   um auf der Grundlage von einer Flüssigkeitsmenge, die von der Bohrlochpumpe (126) der Pumpeinheit (100) während des vorbestimmten Zeitraums erzeugt worden ist, von den summierten ersten Bereichen (414) und von der Druckdifferenz (402) über der Bohrlochpumpe (126) eine Leckproportionalitätskonstante (420) der Bohrlochpumpe (126) zu bestimmen.

9. Vorrichtung nach Anspruch 8, wobei der Prozessor (148) ausgestaltet ist, um einen zweiten Bereich (428) einer zweiten Pumpkarte (426) zu bestimmen.

10. Vorrichtung nach Anspruch 9, wobei der Prozessor (148) ausgestaltet ist, um auf der Grundlage von der Leckproportionalitätskonstante (420) und von dem zweiten Bereich (428) ein Nettofluid, das während eines Hubs der Pumpeinheit erzeugt worden ist, zu bestimmen.

11. Vorrichtung nach einem der Ansprüche 8 bis 10, wobei der Prozessor (148) ein Teil einer Stabpumpensteuerung (142) ist.

12. Vorrichtung nach einem der Ansprüche 8 bis 11, wobei, während die Pumpeinheit (100) kontinuierlich über einen zweiten vorbestimmten Zeitraum betrieben wird, der Prozessor (148) ausgestaltet ist, um zweite Bereiche (428) von zweiten Pumpkarten (426) zu bestimmen.

13. Vorrichtung nach einem der Ansprüche 8 bis 12, wobei der Prozessor (148) ausgestaltet ist, um auf der Grundlage von der Proportionalitätskonstante (420) und von den zweiten Bereichen (428) ein Nettofluid bestimmen soll, das während des zweiten vorbestimmten Zeitraums erzeugt worden ist, zu bestimmen.

**Revendications**

1. Procédé, comprenant :

   mesurer une quantité de liquide produite à partir d'un puits (406) par une unité de pompage (100) pendant une période de temps prédéterminée ;
   déterminer de premières zones (412) de premières cartes de pompe (410) pendant la période de temps prédéterminée ;
   additionner les premières zones (414) ;
   déterminer une différence de pression (402) à travers une pompe de fond de trou (126) de l'unité de pompage (100) ; et
   sur la base de la quantité de liquide produite (418), des premières zones (414) additionnées et de la différence de pression (402), déterminer une constante de proportionnalité de fuite (420) de la pompe de fond de trou (126) de l'unité de pompage (100).

2. Procédé selon la revendication 1, comprenant en outre, tout en actionnant en continu l'unité de pompage (100), de déterminer une seconde zone (428) d'une seconde carte de pompe (426).

3. Procédé selon la revendication 2, comprenant en outre de déterminer un fluide net produit pendant une course (430) de l'unité de pompage (100) sur la base de la constante de proportionnalité de fuite (420) et de la seconde zone (428).

4. Procédé selon l'une des revendications précédentes, dans lequel mesurer la quantité de liquide produite comprend de mesurer le liquide produit dans des conditions de séparateur en utilisant un séparateur de test de puits (150).

5. Procédé selon l'une des revendications précédentes, dans lequel déterminer les premières zones (412) de premières cartes de pompe (410) pendant la période de temps prédéterminée comprend d'utiliser un dispositif de commande de pompe à tige (142) pour déterminer les premières zones (412).

6. Procédé selon l'une des revendications précédentes, comprenant en outre, tout en actionnant en continu l'unité de pompage (100) sur une seconde période de temps prédéterminée (422), de déterminer de secondes zones (428) de secondes cartes de pompe (426).

7. Procédé selon la revendication 6, comprenant en outre de déterminer un fluide net (432) produit pendant la seconde période de temps prédéterminée sur la base de la constante de proportionnalité (420) et des secondes zones (428).

8. Appareil comprenant :

   une unité de pompage (100) ;
   un logement à usage avec l'unité de pompage (100) ; et
   un processeur (148) positionné dans le logement, le processeur (148) étant destiné à :

      déterminer de premières zones (412) de premières cartes de pompe (410) pendant une période de temps prédéterminée ;
      additionner les premières zones (414) ;
      déterminer une différence de pression (402) sur une pompe de fond de trou (126) de l'unité de pompage (100) ; et
      sur la base d'une quantité de liquide produite par la pompe de fond de trou (126) de l'unité de pompage (100) pendant la période de temps prédéterminée, des premières zones (414) additionnées et de la différence de pression (402) à travers la pompe de fond de trou (126), déterminer une constante de proportionnalité de fuite (420) de la pompe de fond de trou (126).

9. Appareil selon la revendication 8, dans lequel le processeur (148) est destiné à déterminer une seconde zone (428) d'une seconde carte de pompe (426).

10. Appareil selon la revendication 9, dans lequel le processeur (148) est destiné à déterminer un fluide net produit pendant une course de l'unité de pompage sur la base de la constante de proportionnalité de fuite (420) et de la seconde zone (428).

**11.** Appareil selon l'une des revendications 8 à 10, dans lequel le processeur (148) fait partie d'un dispositif de commande de pompe à tige (142).

**12.** Appareil selon l'une des revendications 8 à 11, dans lequel, tout en actionnant en continu l'unité de pompage (100) sur une seconde période de temps prédéterminée, le processeur (148) est destiné à déterminer de secondes zones (428) de secondes cartes de pompe (426).

**13.** Appareil selon la revendication 12, dans lequel le processeur (148) est destiné à déterminer un fluide net produit pendant la seconde période de temps prédéterminée sur la base de la constante de proportionnalité (420) et des secondes zones (428).

FIG. 1

FIG. 2

Polished Rod Load [lbf] — 204

200

upstroke

208 — 2

206 — 1

210 — 3

212 — 4

downstroke

Polished Rod Position [inch] — 202

FIG. 3

START

DETERMINE PRESSURE DIFFERENCE ACROSS DOWNHOLE PUMP — 402

BEGIN DIRECT MEASUREMENT OF
LIQUID PRODUCTION FROM A WELL — 404

DIRECTLY MEASURE LIQUID PRODUCTION FROM THE WELL — 406

HAS PUMPING UNIT COMPLETED A STROKE — 408
NO / YES

COMPUTE PUMP CARD — 410

DETERMINE AREA OF PUMP CARD — 412

SUM AREAS OF DETERMINED PUMP CARD(S) — 414

HAS PREDETERMINED TIME PERIOD ELAPSED — 416
NO / YES

DETERMINE TOTAL LIQUID PRODUCTION DURING PREDETERMINED TIME PERIOD — 418

BASED ON PRESSURE DIFFERENCE, SUM OF AREAS AND THE TOTAL LIQUID
PRODUCTION, DETERMINE A LEAKAGE PROPORTIONALITY CONSTANT — 420

BEGIN TO INFER PRODUCTION DURING NORMAL OPERATION OF PUMPING UNIT FOR
A PRE-DETERMINED TIME PERIOD — 422

HAS PUMPING UNIT COMPLETED A STROKE — 424
NO / YES

COMPUTE PUMP CARD — 426

DETERMINE AREA OF PUMP CARD — 428

BASED ON PRESSURE DIFFERENCE, THE AREA OF THE PUMP CARD AND THE TOTAL
LIQUID PRODUCTION, DETERMINE INFERRED PRODUCTION FROM THE STROKE — 430

SUM PRODUCTION FROM THE STROKE(S) — 432

HAS PREDETERMINED TIME PERIOD ELAPSED — 434
NO / YES

END?
NO / YES

END

**FIG. 4**

FIG. 5

**EP 3 129 655 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130024138 A
- US 7212923 B